# EUROPÄISCHE PATENTANMELDUNG

(11) **EP 2 957 896 A1**
(43) Veröffentlichungstag der Anmeldung: **23.12.2015**
(21) Anmeldenummer: 14172737.0
(22) Anmeldetag: 17.06.2014
(51) Int. Cl.: G01N 21/51, G02B 5/00

(54) **Optische Vorrichtung zur Leitung eines Strahlenbündels und Blende zum Einbauen in diese**

(71) Anmelder: Siemens Healthcare Diagnostics Products GmbH, 35041 Marburg (DE)
(72) Erfinder: Die Erfindernennung liegt noch nicht vor
(74) Vertreter: Maier, Daniel Oliver

(57) **Zusammenfassung**

Die Erfindung betrifft eine optische Vorrichtung zur Leitung eines Strahlenbündels mit einem Gehäuse (11), in dem ein Kanal (12) für die Leitung des Strahlenbündels angeordnet ist (beispielsweise ein Photometriegerät wie ein Nephelometer). Außerdem weist dieses Gehäuse eine Blende (20) auf, die einen ungestreuten Teil des Strahlenbündels abschatten soll. Erfindungsgemäß ist vorgesehen, dass in dem Gehäuse Referenzflächen (31, 32, 34, 39) vorgesehen sind, an denen die Blende (20) mit korrespondierenden Referenzflächen anliegt. Auf diese Weise wird auf einfachem Wege die genaue Positionierung der Blende beim Einbau gewährleistet. Hierdurch lässt sich vorteilhaft der Fertigungs- und Montageaufwand bei Einhaltung enger, optischer Toleranzen des montierten Gesamtsystems erreichen. Gegenstand der Erfindung ist überdies eine Blende (20), die zum Einbau in das Gehäuse (11) geeignet ist.

## Beschreibung

Die Erfindung betrifft eine optische Vorrichtung zur Leitung eines Strahlenbündels, welche ein Gehäuse mit einem Kanal aufweist, in dem der Strahlengang verläuft, wobei in dem Strahlengang eine Blende angeordnet ist.

Derartige Vorrichtungen sind bekannt und werden beispielsweise für die optische Analyse von Proben verwendet. Der Kanal dient dabei der Leitung des Strahlenbündels, welches zur optischen Untersuchung beispielsweise einer Probe verwendet wird.

Weiterhin betrifft die Erfindung eine Blende. Solche Blenden werden insbesondere auch in optische Vorrichtungen der eingangs angegebenen Art eingebaut, damit bei Leitung des Strahlenbündels bestimmte Lichtanteile ausgeblendet werden können.

Heutige Analysegeräte sind in der Lage, eine Vielzahl von Nachweisreaktionen und Analysen mit einer Probe durchzuführen. Um eine Vielzahl von Untersuchungen automatisiert durchführen zu können, sind diverse Vorrichtungen zum räumlichen Transfer von Messzellen, Reaktionsbehältern und Reagenzbehältern erforderlich, wie z. B. Transferarme mit Greiffunktion, Transportbänder oder drehbare Transporträder, sowie zum Transfer von Flüssigkeiten, wie z. B. Pipettiervorrichtungen. Auch ist es, wie in der DE 10 2009 043 524 A1 beschrieben, möglich, die Messeinrichtung des Analysegerätes beweglich auszuführen, während die Messzellen in ihren Aufnahmevorrichtungen unbeweglich bleiben. Geeignete Geräte umfassen eine Steuereinheit, die mittels entsprechender Software dazu in der Lage ist, die Arbeitsschritte für die gewünschten Analysen weitgehend selbstständig zu planen und abzuarbeiten.

Als Aufnahmevorrichtung im Zusammenhang dieser Erfindung soll eine Einrichtung verstanden werden, die einerseits eine Fixierung der Messzelle erlaubt und andererseits den für die Messzelle erforderlichen Bauraum einschließt. Durch diesen Bauraum, der als Teil der Aufnahmevorrichtung zu verstehen ist, verläuft auch das Strahlenbündel des Messlichtes. Die Messzelle kann auswechselbar oder bleibend in der Aufnahmevorrichtung fixiert sein. Eine bleibende Fixierung ermöglicht auch eine Integration der Messzelle in das Analysegerät.

Viele der in derartigen Analysegeräten verwendeten Analyseverfahren beruhen auf optischen Methoden. Diese Verfahren ermöglichen den qualitativen und quantitativen Nachweis von Analyten, d.h. der nachzuweisenden oder zu bestimmenden Substanzen oder Teilchen, in Proben. Die Bestimmung klinisch relevanter Parameter, wie zum Beispiel der Konzentration oder Aktivität eines Analyten, erfolgt vielfach, indem ein Teil einer Probe mit einem oder mehreren Testreagenzien in einem Reaktionsgefäß, welches auch die Messzelle sein kann, vermischt wird, wodurch z.B. eine biochemische Reaktion oder eine spezifische Bindungsreaktion in Gang gesetzt wird, die eine messbare Veränderung einer optischen oder anderen physikalischen Eigenschaft des Testansatzes bewirkt.

Insbesondere können moderne Analysegeräte mit einem Photometriesystem ausgestattet sein. Mittels des Photometriesystems lässt sich die Konzentration feinverteilter, kolloidaler Teilchen in Flüssigkeiten oder Gasen quantitativ bestimmen: Wird eine Suspension kleiner Partikel in einen Lichtstrahl verbracht, so wird ein Teil des eingetretenen Lichtes des Strahlenbündels des Lichtstrahls absorbiert, ein anderer Teil, auch als Primärstrahl bezeichnet, verlässt die Suspension ungestreut und wieder ein anderer Teil wird seitlich zum eintretenden Strahl gestreut. Bei der Nephelometrie wird dieses seitlich austretende Streulicht gemessen. Als Strahlenbündel soll im Rahmen dieser Anmeldung auch das Licht eines Laserstahls verstanden werden.

Die Nephelometrie wird vor allem für den quantitativen oder qualitativen Nachweis von Analyten, beispielsweise Proteinen, eingesetzt, die sich bevorzugt mittels einer spezifische Bindungsreaktion zwischen zwei spezifischen Bindungspartnern, z.B. mittels Antigen-Antikörper-Bindung, nachweisen lassen. Bei einem quantitativen Nachweis wird die Menge, die Konzentration oder die Aktivität des Analyten in der Probe gemessen. Von dem Begriff des quantitativen Nachweises sind auch semiquantitative Methoden umfasst, die nur die ungefähre Menge, Konzentration oder Aktivität des Analyten in der Probe erfassen oder nur zu einer relativen Mengen-, Konzentrations- oder Aktivitätsangabe dienen können. Unter einem qualitativen Nachweis ist der Nachweis des Vorhandenseins des Analyten in der Probe überhaupt oder das Anzeigen, dass die Menge, Konzentration oder Aktivität des Analyten in der Probe unterhalb oder oberhalb eines bestimmten oder mehrerer bestimmter Schwellenwerte liegt, zu verstehen.

Ein Nephelometriesystem umfasst, wie in der DE 198 49 597 A1 beschrieben, üblicherweise mindestens ein Mittel zur Erzeugung eines Strahlenbündels, welches eine Lichtquelle umfasst, und mindestens einen Photodetektor sowie mindestens eine Aufnahmevorrichtung für eine Messzelle. In dieser Bauweise können Lichtquelle, Aufnahmevorrichtung und Photodetektor derart angeordnet sein, dass der Photodetektor das gestreute Licht unter Winkeln oder Winkelbereichen um die Ausbreitungsrichtung des von der Lichtquelle ausgesandten Lichtstrahls erfasst, in denen die Intensität des Streulichts relativ hoch ist. Den Photodetektor erreicht in dieser Geometrie jedoch nicht nur das Streulicht, sondern auch der Primärstrahl. Da jedoch nur der gestreute Teil des Lichtes zum Messergebnis beitragen soll und Licht des Primärstrahls, das auf den Detektor trifft, letztlich nur zu einer Verschlechterung des Signal-Rausch-Abstandes führt, ist für eine Optimierung des Messergebnisses eine möglichst vollständige Ausblendung des Primärstrahls erforderlich. Hierfür wird eine optische Blende eingesetzt. Diese wird mittels dünner Stege im Strahlengang gehalten und hinsichtlich ihrer Größe und Form so angepasst, dass sie einen möglichst großen Teil des Primärstrahls ausblendet, so dass möglichst ausschließlich Streulicht auf den Detektor trifft. Gemäß der DE 36 08 552 A1 können weitere Blenden eingesetzt werden, um das Streulicht noch besser vom Licht des Primärstahls zu trennen.

Damit die Blenden möglichst exakt arbeiten, müssen diese sehr genau in dem Gehäuse, welches den Kanal zur Verfügung stellt, ausgerichtet werden. Hiermit ist ein gewisser Fertigungsaufwand zur Herstellung der Teile und Montageaufwand beim Einsetzen der Blende in das Gehäuse erforderlich.

Die Aufgabe der Erfindung besteht darin, die eingangs angegebene optische Vorrichtung beziehungsweise eine für den Einsatz in dieser Vorrichtung geeignete Blende anzugeben, mit der sich der Fertigungsaufwand sowie der Montageaufwand verringern lässt.

Diese Aufgabe wird mit der eingangs angegebenen Vorrichtung erfindungsgemäß dadurch gelöst, dass das Gehäuse in einer den Kanal zur Leitung des Strahlenbündels begrenzenden Wand eine Durchtrittsöffnung aufweist, durch die die Blende von außerhalb des Kanals in diesen eingeschoben werden kann. Dabei weist die Durchtrittsöffnung mindestens eine Passfläche auf, an der die Blende anliegt und die die Lage der Blende in einer Raumrichtung festlegt. Durch die Passfläche ist es vorteilhaft möglich, die Blende in der durch die Passfläche vorgegebenen Raumrichtung während der Montage festzulegen, so dass sich nach der Montage in dieser Raumrichtung eine eindeutige Positionierung der Blende ergibt. Die Durchtrittsöffnung kann in das Gehäuse nach dessen Herstellung eingebracht werden. Vorteilhaft kann dies beispielsweise durch spanende Verfahren wie Bohren oder Fräsen erfolgen. Hierbei kann die Durchtrittsöffnung am geplanten Strahlengang des Strahlenbündels ausgerichtet werden, wobei Fertigungstoleranzen des Gehäuses eliminiert werden. In vielen Fällen wird der Strahlengang des Strahlenbündels auch durch andere optische Einrichtungen, wie zum Beispiel Sammeloptiken, geleitet. Auch gegenüber diesen optischen Elementen ist eine eindeutige Ausrichtung möglich, wodurch das Zusammenspiel aller optischen Einrichtungen gewährleistet wird.

Die Durchtrittsöffnung ist größer ausgeführt als die Projektion der Blende in Montagerichtung, also Einschubrichtung derselben. Dies gewährleistet, dass die Blende sich leicht in die Durchtrittsöffnung einschieben lässt, wobei nur die Passflächen so ausgeführt sind, dass diese die Blende im eingebauten Zustand berühren.

Gemäß einer vorteilhaften Ausgestaltung der Erfindung ist vorgesehen, dass die Durchtrittsöffnung eine Passfläche oder zwei sich gegenüberliegende Passflächen aufweist, die die Blende senkrecht zur Strahlachse des Strahlenganges und senkrecht zur Einschieberichtung der Blende festlegen (diese Richtung kann als y-Richtung im karthesischen Koordinatensystem definiert werden). Mit einer Festlegung der Blende in dieser Richtung wird vorteilhaft erreicht, dass die Blende in einer Raumrichtung lateral zur Strahlausrichtung eindeutig definiert wird. Gemäß einer anderen Ausgestaltung der Erfindung ist vorgesehen, dass die Durchtrittsöffnung eine Passfläche aufweist, die die Blende in Einschieberichtung der Blende festlegt (definiert als x-Richtung). Diese Passfläche kann beispielsweise als Anschlag ausgeführt sein, der die Einschubbewegung begrenzt. Hierdurch wird die laterale Lage der Blende im Strahlengang in einer Raumrichtung senkrecht zu der bereits angegebenen Raumrichtung festgelegt.

Vorteilhaft kann noch vorgesehen werden, dass in der den Kanal begrenzenden Wand in Einschieberichtung der Blende gesehen gegenüberliegend der Durchtrittsöffnung eine weitere Öffnung vorgesehen ist, wobei die weitere Öffnung mindestens eine Passfläche aufweist, an der die Blende anliegt und die die Lage der Blende in einer Raumrichtung festlegt. Hierdurch ist es vorteilhaft möglich, dass die Blende nicht fliegend in einer Durchtrittsöffnung gelagert ist, sondern an den sich gegenüberliegenden Wänden des Kanales abstützt. Eine solche Anordnung ist besonders vorteilhaft, wenn eine schwingende Beanspruchung der Vorrichtung zu erwarten ist, da die Blende auch bei Erschütterungen oder durch Einleitung von Schwingungen in ihrer Einbaulage stabilisiert wird. Die weitere Öffnung muss keine Durchtrittsöffnung sein, da die Blende auf der gegenüberliegenden Seite des Kanals nicht aus der Wand herausragen muss. Ist die Öffnung keine Durchtrittsöffnung, so kann der Boden der Öffnung eine Passfläche in Einschubrichtung (d. h. x-Richtung) darstellen, wie dies bereits für die Durchtrittsöffnung beschrieben wurde. Vorteilhaft kann die weitere Öffnung auch eine Passfläche oder zwei sich gegenüberliegende Passflächen aufweisen, die die Blende senkrecht zur Strahlachse des Strahlenganges und senkrecht zur Einschieberichtung der Blende (also in y-Richtung) festlegen. Mit dieser Passfläche und eventuell durch Vorsehen eines Öffnungsbodens in der weiteren Öffnung ist die bereits beschriebene Festlegung der Lage der Blende in zwei rechtwinklig zueinander stehenden Raumrichtungen (der x-y-Ebene) lateral zum Strahlengang möglich.

Gemäß einer besonderen Ausgestaltung der Erfindung ist vorgesehen, dass die Durchtrittsöffnung eine Passfläche oder zwei sich gegenüberliegende Passflächen aufweist, die die Blende in Richtung der Strahlachse des Strahlenganges (also in z-Richtung) festlegen. Dementsprechend ist gemäß einer weiteren vorteilhaften Ausgestaltung der Erfindung vorgesehen, dass die weitere Öffnung eine Passfläche oder zwei sich gegenüberliegende Passflächen aufweist, die die Blende in Richtung der Strahlachse des Strahlenganges festlegen. Die Festlegung der Blende in der Durchtrittsöffnung oder der weiteren Öffnung in Richtung der Strahlachse ist besonders vorteilhaft, wenn die Lage der Blende bezüglich bestimmter Fokuspunkte von weiteren optischen Elementen im Strahlengang des Strahlenbündels abhängig ist. Hierdurch wird die Blende nämlich in ihrer axialen Lage bestimmt und kann so beispielsweise genau in einem Fokuspunkt angeordnet werden. Die genaue Positionierung der Blende ermöglicht es insbesondere in diesem Fall, dass die Blendenfläche vorteilhaft vergleichsweise klein gewählt werden kann.

Weiterhin ist es vorteilhaft, wenn die Durchtrittsöffnung und/oder die weitere Öffnung mit einem Material verschlossen sind. Dieses Material kann beispielsweise eine Vergussmasse sein. Die Verwendung eines solchen Materials hat den Vorteil, dass die Blende nach Montage und Ausrichtung an den Passflächen bleibend in dieser Positionierung fixiert wird. Außerdem kann verhindert werden, dass Verunreinigungen durch die Durchtrittsöffnung oder weitere Öffnung in das Innere des Kanals gelangen können.

Wie viele Passflächen in einem bestimmten Anwendungsfall vorgesehen werden müssen, hängt davon ab, in welchen Raumrichtungen die Blende abhängig vom Anwendungsfall genau fixiert werden muss. Soll die Blende beispielsweise einen parallel verlaufenden Laserstrahl abfangen, ist deren axiale Ausrichtung nicht von vorrangiger Bedeutung. Aus wirtschaftlichen Erwägungen werden vorteilhaft immer nur so viele Passflächen ausgebildet, wie im einzelnen Anwendungsfall erforderlich ist.

Die Durchtrittsöffnung und/oder die weitere Öffnung können vorteilhaft als Bohr- oder Fräslöcher ausgeführt sein. Mit diesen Verfahren lassen sich vorteilhaft Passflächen herstellen, die eine genügend gute Oberflächengüte haben, damit diese nicht nachbearbeitet werden müssen. Außerdem lassen sich die Bohr- oder Fräswerkzeuge mit genügender Genauigkeit an die Vorrichtung annähern, damit eine eng tolerierte Herstellung der Passflächen möglich wird. Dabei wird als Bezugssystem für die Ausrichtung der Werkzeuge der intendierte Strahlengang des Strahlenbündels gewählt. Als Passflächen können dabei die Lochwände dienen, wobei diese insbesondere durch radiales Führen eines Fräskopfes ebene Flächenanteile erhalten können. In Einschieberichtung der Blende können insbesondere die Lochböden von Bohr- beziehungsweise Fräslöchern verwendet werden, da die axiale Bewegung der Werkzeuge der späteren Einschieberichtung der Blende entsprechen.

Die Vorrichtung kann vorteilhaft als Streulichtmessytem, insbesondere als Nephelometriegerät verwendet werden.

Die Erfindung wird weiterhin durch die eingangs angegebene Blende gelöst. Diese ist für den Einbau in eine optische Vorrichtung zur Leitung eines Strahlenbündels geeignet, wie diese bereits beschrieben wurde. Erfindungsgemäß ist vorgesehen, dass die Blende mindestens eine Referenzfläche aufweist, die im eingebauten Zustand durch die korrespondierende Passfläche des Gehäuses in mindestens einer Raumrichtung festgelegt wird. Die Vorteile einer Ausrichtung der Blende in der angegebenen Form sind vorstehend bereits im Rahmen der Beschreibung des Gehäuses eingehend erläutert worden.

Gemäß einer Ausgestaltung der erfindungsgemäßen Blende ist vorgesehen, dass diese eine Blendenfläche aufweist, die an mindestens einem Haltesteg befestigt ist, wobei der Haltesteg mit der mindestens einen Referenzfläche verbunden ist. Dabei bestimmt die Blendenfläche vorteilhaft die optischen Eigenschaften der Blende. Die Eigenschaften werden einerseits durch die Blendenform und andererseits durch den Flächeninhalt der Blendenfläche bestimmt. Außerdem kann die Blendenfläche über die Haltestege an einer bestimmten Stelle des Querschnittes des Kanals angeordnet werden. Als Blendenfläche wird somit die Baueinheit des optisch wirksamen Teils der Blende bezeichnet. Als Blende wird das gesamte Bauteil mit Haltesteg (wenn vorhanden) und mindestends einer Referenzfläche verstanden.

Gemäß einer anderen Ausgestaltung der Erfindung ist vorgesehen, dass die Blende plattenförmig ausgebildet ist. Unter plattenförmig ist im Sinne der Erfindung ein flaches und ebenes Bauteil zu verstehen. Dieses kann vorzugsweise aus einem plattenförmigen Halbzeug wie einem Blech erzeugt werden. Hierbei ist es denkbar, dass die Blende ausgestanzt oder mittels Laserschneiden aus dem Halbzeug herausgelöst wird. Die Blende kann nach ihrer Herstellung insbesondere auch mit einem Licht schluckenden Material beschichtet werden, um deren optische Eigenschaften zu verbessern. Weiterhin kann vorteilhaft vorgesehen werden, dass die mindestens eine Referenzfläche an einem verbreiterten Bereich am Ende der Blende ausgebildet ist. Dieser Bereich weist vorteilhaft genügend Bauraum auf, damit Referenzflächen ausgebildet werden können. Außerdem bewirkt die Verbreiterung der Enden vorteilhaft, dass die korrespondierenden Durchtrittsöffnungen oder Öffnungen im Gehäuse genügend groß ausgebildet sind, damit die Blende leicht eingeschoben werden kann. Das Einschieben der Blende kann vorteilhaft überdies durch Einführschrägen an den verbreiterten Bereichen vereinfacht werden.

Eine weitere Ausgestaltung der Erfindung wird erhalten, wenn in der Blende Ausnehmungen zur Befestigung weiterer Bauteile vorgesehen sind. Diese können beispielsweise aus Schlitzen bestehen, wobei andere Blenden in diese Schlitze eingefügt werden können. Auch die Befestigung anderer optischer Elemente ist denkbar. Die Schlitze ermöglichen vorteilhaft eine genaue Ausrichtung der angebauten Bauteile, da die Blende selbst ebenfalls genau im Strahlengang des Kanals ausgerichtet ist.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben. Es zeigen:
- Figur 1: ein Streulichtmesssystem als Beispiel für die erfindungsgemäße Vorrichtung im schematischen Längsschnitt,
- Figur 2 - 4: Ausführungsbeispiele der erfindungsgemäßen Blende als Aufsichten,
- Figur 5: ein Ausführungsbeispiel der erfindungsgemäßen Vorrichtung mit einem Ausführungsbeispiel der erfindungsgemäßen Blende in Einbaulage im Querschnitt und
- Figur 6 und 7: Teilausschnitte der Vorrichtung gemäß Figur 5.

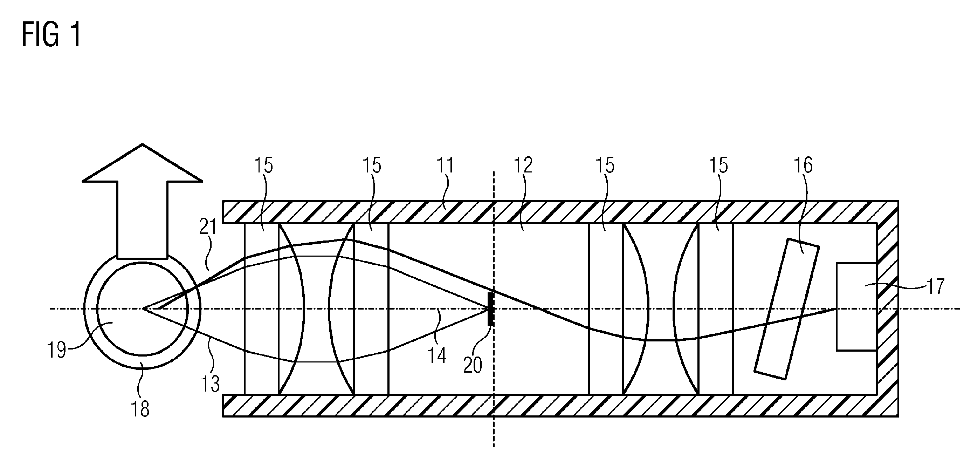

Eine Vorrichtung gemäß Figur 1 weist ein Gehäuse 11 auf, in dem ein Kanal 12 zur Leitung eines Strahlenbündels 13 entlang einer Strahlachse 14 vorgesehen ist. Auf der Strahlachse 14 sind optische Elemente in Form von Sammellinsen 15, einem Tageslichtfilter 16 und einem Photodetektor 17 angeordnet. In der Strahlachse 14 befindet sich gerade eine Messzelle 18 in Form einer Küvette, die eine Probe 19 enthält.

Das Licht einer nicht dargestellten Lichtquelle wird in der Probe 19 fokussiert und bildet beim Austritt das Strahlenbündel 13, welches als Primärstrahl durch eine Blende 20 absorbiert wird. Die Probe 19 enthält Partikel, die Licht aus dem Strahlenbündel 13 streuen, wobei ein Lichtstrahl des Streulichtes 21 dargestellt ist. Dieser verläuft in einer Richtung, dass er an der Blende 20 vorbeigeht und auf den Photodetektor 17 trifft. Zusammen mit anderen Strahlen des Streulichts wird auf diese Weise ein Messsignal generiert.

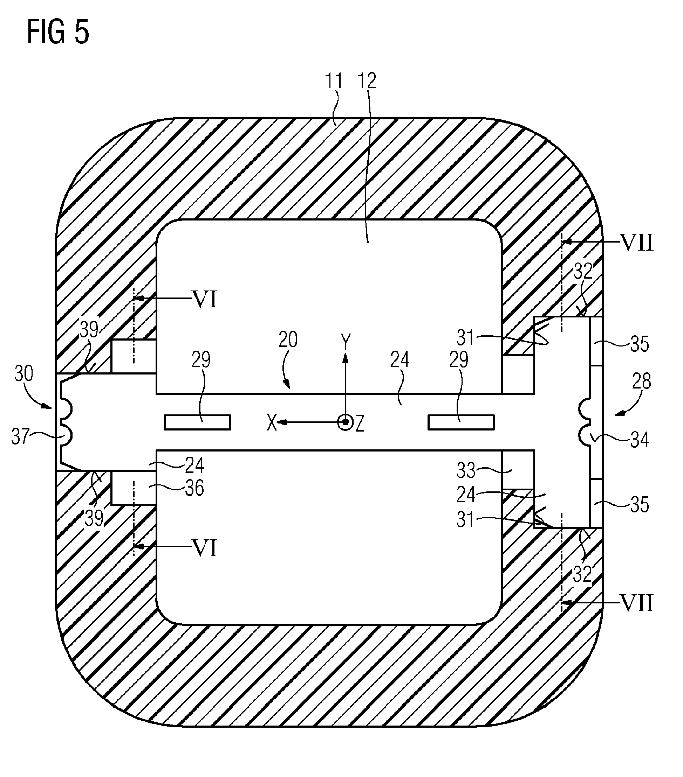

Die Blende 20 ist auf nicht näher dargestellte Weise im Gehäuse 11 montiert. Eine Möglichkeit besteht beispielsweise in einer Montage, wie in Figur 5 dargestellt. Die Montagerichtung der Blende 20 liegt senkrecht zur Zeichenebene, beispielsweise in diese hinein.

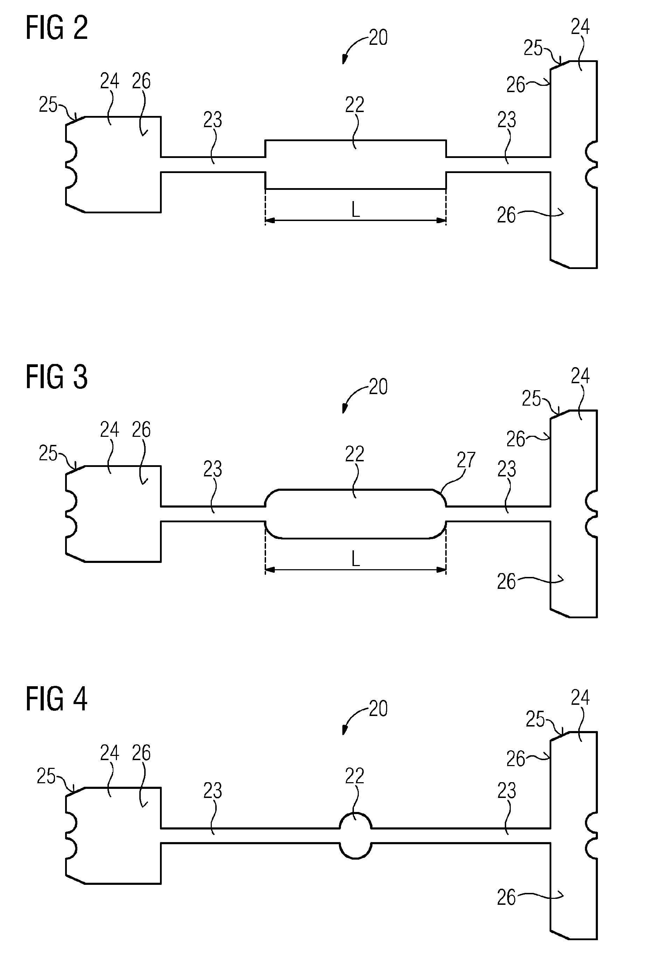

Die Blende 20 gemäß Figur 2 weist eine Blendenfläche 22 auf, die durch Haltestege 23 mit verbreiterten Bereichen 24 verbunden ist. Die Bereiche 24 befinden sich jeweils an den Enden der Blende. Die Blendenfläche 22 weist eine Länge L auf und ist rechteckig ausgeführt. Die verbreiterten Bereiche 24, mit denen die Blende 20 im Gehäuse 11 fixiert wird, weisen Einführschrägen 25 auf, die das Einfädeln der Blende in das Gehäuse erleichtern. Außerdem dienen mehrere Flächenabschnitte der verbreiterten Bereiche 24 als Referenzflächen 26, die, wie in Figur 5 dargestellt, mit verschiedenen Passflächen (z. B. 32) im Gehäuse korrespondieren und auf diese Weise die Lage der Blende 20 eindeutig festlegen.

Die Blende 20 gemäß Figur 3 unterscheidet sich von derjenigen gemäß Figur 2 nur in der Form der Blendenfläche 22, die an den Ecken jeweils Rundungen 27 aufweist.

Die Blende gemäß Figur 4 eignet sich zum Ausblenden des Strahlenbündels bei einem Aufbau der Vorrichtung gemäß Figur 1, wo die Blende im Fokuspunkt des Strahlenbündels liegt und deshalb nur eine kleine Blendenfläche erforderlich ist.

In Figur 5 ist das Gehäuse 11 im Querschnitt zu sehen. In den Kanal 12 ist durch eine Durchtrittsöffnung 28 eine Blende 20 eingeschoben, die zusätzlich Ausnehmungen 29 für ein nicht dargestelltes Bauteil aufweist. Gegenüber der Durchtrittsöffnung 28 ist eine Öffnung 30 vorgesehen, in die die Blende 20 von der Seite des Kanals 12 aus hineingeschoben wird. Dabei kommen die verbreiterten Bereiche 24 der Blende 20 in der Durchtrittsöffnung 28 und der Öffnung 30 zu liegen.

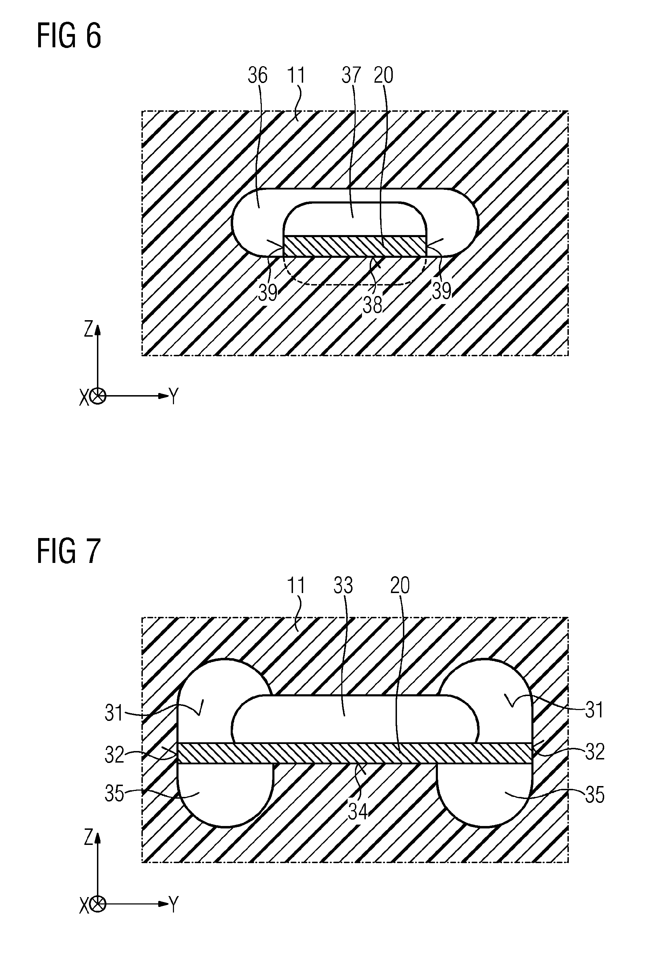

Die Anordnung der Passflächen lässt sich Figur 5 in Verbindung mit den Figuren 6 und 7 entnehmen. Durch einen Vergleich der verschiedenen Blickrichtungen wird auch deutlich, wie die entsprechenden Passflächen wirken, das heißt, in welcher Raumrichtung sie die Blende 20 festlegen. Zu diesem Zweck ist ein Koordinatensystem x-y-z in den Figuren 5 - 7 eingezeichnet. Dabei liegt der Querschnitt des Kanals 12 gemäß Figur 5 in der x-y Ebene, wobei die x-Richtung der Montagerichtung der Blende 20 entspricht. In z-Richtung liegt die Strahlachse 14 (wie Figur 1).

Die Montagebewegung in x-Richtung wird durch zwei Passflächen 31 begrenzt. Diese liegen in Fräslöchern, welche nicht durch die gesamte Wandung gehen und deren Lochboden die Passflächen 31 bildet. Diese beiden Fräslöcher bilden mit ihren länglichen, vertikal ausgerichteten Seitenwänden auch Passflächen 32, an denen die Seitenkanten des verbreiterten Bereiches 24 zu liegen kommen. Das Durchtrittsloch wird weiterhin durch ein gefrästes Langloch 33 gebildet, welches die Wandung durchtritt und dessen unten liegende Seitenwand eine weitere Passfläche 34 ausbildet, welche zur Positionierung der Blende 20 in z-Richtung dient. Durch die gegenseitige Durchdringung des Langloches 33 und der beiden seitlichen Ausfräsungen 35 werden die Rundungen des Langloches 33 im Bereich der Passfläche 34 entfernt.

Die Öffnung 30 besteht aus zwei sich durchdringenden Langlöchern 36, 37, wobei beide Langlöcher nicht die komplette Wandung durchlaufen sondern sich lediglich in ihrem Bodenbereich schneiden. Durch das Langloch 36 ist im mittleren Bereich der langen, geraden Fläche eine Passfläche 38 (vgl. Figur 6) ausgebildet, die eine Festlegung der Blende 20 in z-Richtung gewährleistet. Das Langloch 37 weist einen geraden Bereich der Wandung auf, der als Passfläche 39 für eine Festlegung der Blende 20 in y-Richtung sorgt.

Die Passflächen 32 und 39 sind paarweise gegenüberliegend angeordnet. Hiermit wird eine Bewegung der Blende 20 in positiver und negativer y-Richtung verhindert. Die Passflächen 34 und 38 weisen kein gegenüberliegendes Pendant auf. Diese legen die Lage der Blende in z-Richtung fest, diese kann sich jedoch in positiver z-Richtung von der jeweiligen Passfläche weg bewegen. Um dies zu verhindern, können die Durchtrittsöffnung 28 und die Öffnung 30 mit einer Vergussmasse ausgefüllt werden (nicht dargestellt).

### Bezugszeichenliste

- 11: Gehäuse
- 12: Kanal
- 13: Strahlenbündel
- 14: Strahlachse
- 15: Sammellinse
- 16: Tageslichtfilter
- 17: Photodetektor
- 18: Messzelle
- 19: Probe
- 20: Blende
- 21: Streulicht
- 22: Blendenfläche
- 23: Haltestege
- 24: Bereiche
- 25: Einführschräge
- 26: Referenzfläche
- 27: Rundungen
- 28: Durchtrittsöffnung
- 29: Ausnehmungen
- 30: Öffnung
- 31: Passfläche
- 32: Passfläche
- 33: Langloch
- 34: Passfläche
- 35: Ausfräsungen
- 36: Langloch
- 37: Langloch
- 38: Passfläche
- 39: Passfläche

## Patentansprüche

1. Optische Vorrichtung zur Leitung eines Strahlenbündels (13), aufweisend ein Gehäuse (11) mit einem Kanal (12), in dem der Strahlengang verläuft, wobei in dem Strahlengang eine Blende (20) anordenbar ist,
**dadurch gekennzeichnet, dass** das Gehäuse in einer den Kanal (12) begrenzenden Wand eine Durchtrittsöffnung (28) aufweist, durch die die Blende (20) von außerhalb des Kanals in diesen einschiebbar ist, wobei die Durchtrittsöffnung (28) mindestens eine Passfläche (31, 32, 34) aufweist, an der eine eingeschobene Blende (20) anliegt und die die Lage der Blende (20) in mindestens einer Raumrichtung festlegt.

2. Vorrichtung nach Anspruch 1,
**dadurch gekennzeichnet, dass** die Durchtrittsöffnung (28) eine Passfläche (32) oder zwei sich gegenüberliegende Passflächen (32) aufweist, die die Blende (20) senkrecht zur Strahlachse (14) des Strahlenganges und senkrecht zur Einschieberichtung der Blende (20) festlegen.

3. Vorrichtung nach einem der Ansprüche 1 oder 2,
**dadurch gekennzeichnet, dass** die Durchtrittsöffnung (28) eine Passfläche (34) oder zwei sich gegenüberliegende Passflächen (34) aufweist, die die Blende (20) in Richtung der Strahlachse (14) des Strahlenganges festlegen.

4. Vorrichtung nach einem der voranstehenden Ansprüche,
**dadurch gekennzeichnet, dass** die Durchtrittsöffnung (28) eine Passfläche (31) aufweist, die die Blende (20) in Einschieberichtung der Blende festlegt.

5. Vorrichtung nach einem der voranstehenden Ansprüche,
**dadurch gekennzeichnet, dass** in der den Kanal begrenzenden Wand in Einschieberichtung der Blende gesehen gegenüberliegend der Durchtrittsöffnung (28) eine weitere Öffnung (30) vorgesehen ist, wobei die weitere Öffnung (30) mindestens eine Passfläche (38, 39) aufweist, an der die Blende (13) anliegt und die die Lage der Blende (13) in mindestens einer Raumrichtung festlegt.

6. Vorrichtung nach Anspruch 5,
**dadurch gekennzeichnet, dass** die weitere Öffnung (30) eine Passfläche oder zwei sich gegenüberliegende Passflächen (39) aufweist, die die Blende (20) senkrecht zur Strahlachse (14) des Strahlenganges und senkrecht zur Einschieberichtung der Blende (20) festlegen.

7. Vorrichtung nach einem der Ansprüche 5 oder 6,
**dadurch gekennzeichnet, dass** die weitere Öffnung (30) eine Passfläche (38) oder zwei sich gegenüberliegende Passflächen aufweist, die die Blende (20) in Richtung der Strahlachse (14) des Strahlenganges festlegen.

8. Vorrichtung nach einem der voranstehenden Ansprüche,
**dadurch gekennzeichnet, dass** die Durchtrittsöffnung (28) und/oder die weitere Öffnung (30) mit einem Material verschlossen sind.

9. Vorrichtung nach einem der voranstehenden Ansprüche,
**dadurch gekennzeichnet, dass** die Durchtrittsöffnung (28) und/oder die weitere Öffnung (30) als Bohr- oder Fräslöcher ausgeführt sind.

10. Vorrichtung nach Anspruch 9,
**dadurch gekennzeichnet, dass** die Passflächen (31), die die Blende (20) in Einschieberichtung der Blende festlegen, durch den Lochboden der Bohr- oder Fräslöcher ausgebildet sind.

11. Vorrichtung nach einem der voranstehenden Ansprüche,
**dadurch gekennzeichnet, dass** diese ein Streulichtmessgerät, insbesondere ein Nephelometriegerät ist.

12. Blende
**dadurch gekennzeichnet, dass** diese für den Einbau in eine optische Vorrichtung zur Leitung eines Strahlenganges gemäß einem der voranstehenden Ansprüche vorgesehen ist, wobei diese mindestens eine Referenzfläche (26) aufweist, die im in die optische Vorrichtung eingebauten Zustand durch die korrespondierende Passfläche (31, 32, 34) der optischen Vorrichtung in mindestens einer Raumrichtung festgelegt wird.

13. Blende nach Anspruch 12,
**dadurch gekennzeichnet, dass** die Blende eine Blendenfläche (22) aufweist, die an mindestens einem Haltesteg (23) befestigt ist, wobei der Haltesteg (23) mit der mindestens einen Referenzfläche verbunden ist.

14. Blende nach einem der Ansprüche 12 oder 13,
**dadurch gekennzeichnet, dass** diese plattenförmig ausgebildet ist.

15. Blende nach Anspruch 14,
**dadurch gekennzeichnet, dass** die mindestens eine Referenzfläche (26) an mindestens einem Ende der Blende an einem verbreiterten Bereich (24) ausgebildet ist.

16. Blende nach einem der Ansprüche 12 bis 15,
**dadurch gekennzeichnet, dass** in der Blende Ausnehmungen (29) zur Befestigung weiterer Bauteile vorgesehen sind.
